# EUROPÄISCHE PATENTANMELDUNG

(11) **EP 4 053 970 A1**
(43) Veröffentlichungstag der Anmeldung: **07.09.2022**
(21) Anmeldenummer: 22157588.9
(22) Anmeldetag: 18.02.2022
(51) Int. Cl.: H01M 10/60, H01M 50/204, H01M 50/271, H01M 10/667

(54) **GEHÄUSEELEMENT EINER BATTERIE, VERFAHREN ZUR HERSTELLUNG UND VERWENDUNG EINES SOLCHEN**

(30) Priorität: 01.03.2021 DE 102021201922
(71) Anmelder: Robert Bosch GmbH, 70442 Stuttgart (DE)
(72) Erfinder: Schmitt, Markus, 71732 Tamm (DE); Kopp, Benjamin, 71686 Remseck Am Neckar (DE)

(57) **Zusammenfassung**

Die Erfindung betrifft Gehäuseelement einer Batterie, wobei das Gehäuseelement (1) dazu ausgebildet ist, mit einem weiteren Gehäuseelement unter Ausbildung eines zur Aufnahme einer Mehrzahl an Batteriezellen eines Batteriemoduls ausgebildeten gemeinsamen Innenraums verbunden zu werden, wobei das Gehäuseelement (1) an einer ersten Seite (10) eine Temperierstruktur (2) ausbildet und ein Abdeckelement (3) in der Art mit dem Gehäuseelement (1) verbunden ist, dass das Abdeckelement (3) einen von Temperierfluid durchströmbaren Strömungskanal (4) fluiddicht begrenzt und die Temperierstruktur (2) von dem Temperierfluid umströmbar ausgebildet ist, wobei weiterhin ein erstes Element (5) einer Batteriesteuerung thermisch leitend an dem Abdeckelement (3) angeordnet ist.

## Beschreibung

### Stand der Technik

Die Erfindung geht aus von einem Gehäuseelement einer Batterie nach Gattung des unabhängigen Anspruchs. Ferner betrifft die Erfindung auch die Herstellung eines solchen und die Verwendung eines solchen.

Aus dem Stand der Technik ist es bekannt, dass ein Batteriemodul eine Mehrzahl an einzelnen Batteriezellen aufweist, welche jeweils einen positiven Spannungsabgriff und einen negativen Spannungsabgriff aufweisen, wobei zu einer elektrisch leitenden seriellen und/oder parallelen Verbindung der Mehrzahl an Batteriezellen untereinander die jeweiligen Spannungsabgriffe elektrisch leitend miteinander verbunden sind und somit zu dem Batteriemodul zusammengeschaltet werden können. Batteriemodule ihrerseits werden zu Batterien bzw. zu Batteriesystemen zusammengeschaltet.

Aufgrund einer Vielzahl an möglichen, verschiedenen Fahrzeugbauräumen sind variable Modulgrößen anzustreben, um den vorhandenen Bauraum optimal ausnutzen zu können.

Weiterhin erwärmen sich die Batteriezellen eines Batteriemoduls, wie beispielsweise Lithium-Ionen-Batteriezellen oder Lithium-Polymer-Batteriezellen, während eines Betriebes bedingt durch chemische Wandlungsprozesse aufgrund ihres elektrischen Widerstandes bei einer Leistungsabgabe oder einer Leistungsaufnahme. Insbesondere bei einer vergleichbar schnellen Energieabgabe bzw. Energieaufnahme sind diese Prozesse vergleichbar ausgeprägt. Je leistungsfähiger eine Batterie bzw. ein Batteriemodul ist, desto ausgeprägter ist auch die entstehende Erwärmung und damit einhergehend die Anforderungen an ein effizientes Temperiersystem. Um die Sicherheit eines Batteriemoduls zu erhöhen und auch die Leistungsfähigkeit der Batteriezellen sicherzustellen, sind die Batteriezellen eines Batteriemoduls sowohl zu heizen als auch zu kühlen, um diese möglichst in einem bestimmten Temperaturbereich betreiben zu können, sodass beispielsweise ein erhöhtes Alterungsverhalten bzw. eine Zersetzung der Zellchemie verhindert werden kann. Überwiegend sind die Batteriezellen jedoch zu kühlen.

Beispielsweise kann eine Temperierung, also eine Heizung oder Entwärmung, der Batterie durch eine Flüssigkeitstemperierung mit einem Wasser/Glykol-Gemisch ausgebildet werden. Dabei wird dieses Gemisch durch unterhalb des Batteriemoduls angeordnete Kühlplatten geleitet. Die Kühlplatte kann dabei an eine entsprechende Komponente eines Kühlkreislaufes angeschlossen sein.

Stand der Technik sind bspw. die am Anmeldetag der vorliegenden Anmeldung noch unveröffentlichten Druckschriften DE 10 2021 200 040 und DE 10 2019 214 199.

### Offenbarung der Erfindung

Ein Gehäuseelement einer Batterie mit den Merkmalen des unabhängigen Anspruchs bietet den Vorteil, dass eine Temperierung von einzelnen Komponenten der Batterie auf deren jeweilige Bedürfnisse abgestimmt werden kann. Insbesondere können die Anforderungen an die Temperierung von einer Mehrzahl an Batteriezellen und von Komponenten der Leistungselektronik getrennt voneinander abgestimmt und optimiert werden. Somit ist eine Optimierung der Temperierung bzw. Entwärmung der Mehrzahl an Batteriezellen getrennt von einer Optimierung der Temperierung bzw. Entwärmung der Komponenten der Leistungselektronik möglich. Insbesondere kann hierdurch auch der Druckverlust zuverlässig optimiert werden.

Dazu wird erfindungsgemäß ein Gehäuseelement einer Batterie zur Verfügung gestellt. Das Gehäuseelement ist dabei dazu ausgebildet, mit einem weiteren Gehäuseelement unter Ausbildung eines zur Aufnahme einer Mehrzahl an Batteriezellen eines Batteriemoduls ausgebildeten gemeinsamen Innenraums verbunden zu werden.

Dabei bildet das Gehäuseelement an einer ersten Seite eine Temperierstruktur aus. Weiterhin ist ein Abdeckelement in der Art mit dem Gehäuseelement verbunden, dass das Abdeckelement einen Strömungskanal fluiddicht begrenzt, welcher von einem Temperierfluid durchströmbar ausgebildet ist. Die Temperierstruktur ist dabei von dem Temperierfluid umströmbar ausgebildet.

Weiterhin ist ein erstes Element einer Batteriesteuerung thermisch leitend an dem Abdeckelement angeordnet.

Durch die in den abhängigen Ansprüchen aufgeführten Maßnahmen sind vorteilhafte Weiterbildungen und Verbesserungen der im unabhängigen Anspruch angegebenen Vorrichtung möglich.

Insbesondere bietet eine erfindungsgemäße Ausführungsform des Gehäuseelements der Batterie den Vorteil, dass eine effiziente Kühlung der einzelnen Komponenten, wie bspw. der Mehrzahl an Batteriezellen sowie den Komponenten der Leistungselektronik, möglich ist, da vergleichbar kurze thermische Pfade ausgebildet sind. Zugleich kann eine kompakte Ausbildung einer Batterie zur Verfügung gestellt werden.

Das Abdeckelement kann bspw. mittels Rührreibschweißens mit dem Gehäuseelement verbunden werden.

Insgesamt kann das erste Element der Batteriesteuerung zuverlässig temperiert werden. Insbesondere kann das erste Element der Batteriesteuerung dabei unabhängig von der Mehrzahl an Batteriezellen temperiert werden. Die Temperierung des ersten Elements der Batteriesteuerung kann hierbei mittels der Ausbildung der Temperierstruktur beeinflusst werden.

Unter einem Temperierfluid ist ein Medium, wie bspw. einem Gemisch aus Wasser und Glykol zu verstehen, das eine Menge an thermischer Energie aufnehmen bzw. abgeben kann und entsprechend eine Entwärmung bzw. eine Erwärmung einer Umgebung bedingt. Bspw. kann ein zum Betrieb eines Fahrzeugs verwendetes Kühlmittel als Temperierfluid verwendet werden.

Es ist zweckmäßig, wenn die Temperierstruktur in der Art ausgebildet ist, dass sich an der ersten Seite ein Strömungsleitelement erhebt. Dieses Strömungsleitelement begrenzt einen Strömungskanal zum Leiten des Temperierfluids. Dabei erheben sich in dem Strömungskanal weiterhin eine Vielzahl von Wirbelelementen. Diese sind in der Art angeordnet, dass eine turbulente Strömung von in dem Strömungskanal strömendem Temperierfluid bedingt ist. Insbesondere ist das Strömungsleitelement mit einer größeren Höhe ausgebildet als die jeweiligen Wirbelelemente. Somit ist die Abdeckplatte auf dem Strömungsleitelement beabstandet von den Wirbelelementen anordenbar.

Eine turbulente Strömung hat gegenüber einer laminaren Strömung den Vorteil, dass der Wärmeübergang signifikant erhöht ist. Laminare Strömungen sind parallele Schichtströmungen des Fluids ohne wesentlichen Wärmeaustausch senkrecht zu den Schichten bzw. in Kanalhöhe, aufgrund einer fehlenden Vermischung zwischen den Schichten. Durch eine Erhöhung der Turbulenz mit einem Übergang der laminaren Strömung in eine turbulente Strömung kann bei einem vergleichbaren Druckverlust der Wärmeübergang deutlich erhöht werden.

Das Strömungsleitelement kann die erste Seite bspw. umranden, d.h. an einem äußeren Rand des Gehäuseelements an der ersten Seite ausgestaltet sein und dient insbesondere zur Abstützung gegen einen beim Betrieb der Temperierungsvorrichtung anliegenden Innendruck, d.h. einem erhöhten Druck gegenüber dem Umgebungsdruck, der in dem Strömungskanal im Betrieb vorliegen kann.

Unter einem Wirbelelement ist eine geometrische Struktur zu verstehen, die eine laminare Strömung von Temperierfluid zumindest bereichsweise in eine turbulente Strömung überführt. Dazu kann ein Wirbelelement bspw. zylindrisch, konisch, pyramidal oder in jeder weiteren geometrischen Form ausgestaltet sein. Insbesondere können verschiedene Wirbelelemente in verschiedenen geometrischen Formen zusammen ein Muster an Wirbelelementen bilden, das einen besonders hohen Anteil von turbulenten Strömungen in einem Volumenstrom an Temperierfluid bedingt. Durch die in dem Strömungskanal vorgesehenen Wirbelelemente wird eine Durchmischung von in dem Strömungskanal strömendem Temperierfluid erreicht, sodass eine Grenzschicht, die einen Kontakt zwischen dem Temperierfluid und dem Gehäuseelement bildet, stetig aufgewirbelt wird. Weiterhin kann dadurch zum einen die Strömung gezielter umgelenkt werden und zum anderen kann an die wärmeübertragende Fläche signifikant vergrößert werden. Die Wirbelelemente haben vorteilhafterweise keine Anbindung zum Abdeckelement.

Um einen Verlust eines Drucks, mit dem ein Temperierfluid durch den Strömungskanal strömt, zu minimieren, ist das Strömungsleitelement insbesondere mit einer größeren Höhe ausgebildet als jeweilige Wirbelelemente bzw. sind jeweilige Wirbelelemente mit einer geringen Höhe ausgebildet als das Strömungsleitelement, sodass ein auf dem Strömungsleitelement anzuordnendes Abdeckelement beabstandet von den Wirbelelementen angeordnet werden kann. Durch die gegenüber dem Strömungsleitelement niedrigeren Wirbelelemente bildet sich ein Strömungsbereich zwischen dem Abdeckelement und den Wirbelelementen aus, in dem das Temperierfluid ungehindert strömen kann. Aufgrund von durch die Wirbelelemente in das Temperierfluid eingebrachten Strömungsanteilen wird eine Durchmischung von in dem Strömungskanal strömendem Temperierfluid mit zwischen den Wirbelelementen strömendem Temperierfluid erzwungen, sodass es insgesamt zu einer Druckminderung in dem Volumenstrom kommt, jedoch eine konstante Grenzschicht zu dem Gehäuseelement und/oder dem Abdeckelement vermieden wird.

Es kann weiterhin vorgesehen sein, dass das Strömungsleitelement ein Zwischenelement umfasst, das den Strömungskanal in zwei lediglich an einem Ende des Strömungskanals strömungsleitend verbundene Teilkanäle teilt, wobei in einem ersten Teilkanal einen Einlass und in einem zweiten Teilkanal einen Auslass umfasst ist.

Durch ein Zwischenelement, das bspw. den Strömungskanal in zwei Hälften, insbesondere in zwei symmetrische Hälften teilt, kann ein komplexerer Strömungspfad erzeugt und eine direkte bzw. kürzest mögliche Strömungsbewegung von dem Einlass zu dem Auslass verhindert werden (Kurzschlussströmung). Entsprechend bewirkt das Zwischenelement sodann eine Maximierung einer Fläche des Strömungskanals und einen entsprechend maximierten Übergang von thermischer Energie zwischen dem Gehäuseelement und dem Temperierfluid.

Insbesondere kann hierdurch eine als U-Profil ausgebildete Strömung erreicht werden. Dabei können der Einlass und der Auslass weiterhin benachbart zueinander angeordnet sind, wobei bspw. das Zwischenelement eine Kurschlussströmung zwischen Einlass und Auslass verhindern kann. Dazu kann das Zwischenelement, insbesondere stoffschlüssig bspw. mittels Rührreibschweißen und insbesondere zusätzlich zu dem Strömungsleitelement, mit dem Abdeckelement verbunden sind.

Insbesondere kann das Zwischenelement also mit dem Abdeckelement verbunden sein, sodass ein Kurzschlussstrom bzw. eine kürzest mögliche Verbindung zwischen einem Einlass und einem Auslass für das Temperierfluid verhindert wird und das Temperierfluid an dem Strömungskanal entlang geleitet wird.

Die Breite und Länge des Strömungskanals sind maßgeblich auch durch das Zwischenelement bestimmt. Es kann bevorzugt vorgesehen sein, dass das Zwischenelement eine Breite zwischen 8 mm und 12 mm aufweist. Es hat sich in Versuchen überraschend herausgestellt, dass ein Zwischenelement mit einer Breite zwischen 8 mm und 12 mm, insbesondere von 11 mm, zu einem besonders effizienten Austausch von thermischer Energie zwischen dem Gehäuseelement und dem jeweiligen Temperierfluid führt und ein Aufwölben des Abdeckelementes durch den Innendruck im Betrieb sicher verhindert. Durch die stoffschlüssige Verbindung des Zwischenelementes mit dem Abdeckelement können die durch den Innendruck erzeugten Spannungen in der umlaufenden Verbindungsstelle zwischen Strömungsleitelementen und Abdeckelement im Betrieb auf ein für die Erreichung der geforderten Lebensdauer des Bauteils ertragbaren Spannungen reduziert werden.

Es kann weiterhin vorgesehen sein, dass an Flanken des Zwischenelements und/oder an Flanken des Strömungsleitelements weitere Wirbelelemente ausgestaltet sind. An jeweiligen Flanken, d.h. an jeweiligen Seitenteilen des Zwischenelements bzw. an einer Innenseite des Strömungsleitelements ausgebildete weitere Wirbelelemente können eine kontinuierliche Grenzschicht des Temperierfluids an dem Zwischenelement bzw. an dem Strömungsleitelement verhindern. Dadurch kann der Volumenstrom des Temperierfluids in diesen Bereichen verringert werden.

Durch an jeweiligen Flanken des Zwischenelements bzw. des Strömungsleitelements ausgebildete Wirbelelemente wird an dem Zwischenelement bzw. dem Strömungsleitelement entlang strömendes Temperierfluid in eine turbulente Strömung überführt und mit weiteren Teilen des Temperierfluids vermischt, sodass eine homogene Wärmeverteilung innerhalb des Temperierfluids erreicht wird. Zusätzlich wird dadurch verhindert, dass ein Großteil des Temperierfluids zwischen Strömungsleitelement und Wirbelelementen ungehindert hindurchströmt und somit nicht zum Wärmeübergang beiträgt. Die gleichmäßige Strömungsverteilung minimiert den Druckverlust, vergleichmäßigt den Wärmeübergang und trägt zur homogenen und verbesserten Entlüftung bei

Es kann weiterhin vorgesehen sein, dass die Wirbelelemente in einem Muster ausgestaltet sind, welches eine Vielzahl Reihen umfasst.

Dabei sind Wirbelelemente jeweils benachbarter Reihen zwischen 8,5 mm und 12,5 mm beabstandet voneinander und/oder symmetrisch versetzt zueinander angeordnet.

Durch symmetrisch versetzt ausgestaltete Reihen von Wirbelelementen kann eine besonders effiziente Überführung von laminaren Strömungen in turbulente Strömungen bzw. eine Durchmischung von turbulenten Strömungen untereinander und, dadurch bedingt, eine besondere homogene Temperaturverteilung innerhalb eines jeweiligen Volumenstroms an Temperierfluid erreicht werden. Es hat sich in Versuchen überraschend herausgestellt, dass ein Versatz jeweiliger Reihen von Wirbelelementen zwischen 8,5 mm und 12,5 mm, insbesondere von 10,5 mm, zu einem besonders effizienten Austausch von thermischer Energie zwischen dem Gehäuseelement und einem jeweiligen Temperierfluid führt. Der Abstand ist hierbei zwischen jeweiligen Mittelpunkten der Wirbelelemente gemessen.

Es kann weiterhin vorgesehen sein, dass die Wirbelelemente kreisrund ausgebildet sind und einen Durchmesser zwischen 3 mm und 6 mm, insbesondere 4,26 mm, und/oder eine Höhe zwischen 11,5 mm und 14,5 mm, insbesondere 13 mm, und/oder eine Entformungsschräge von mindestens 8 Grad und/oder einen Radius von mindestens 1,5 mm aufweisen.

Es hat sich in Versuchen überraschend herausgestellt, dass kreisrunde, insbesondere zylindrische Wirbelelemente mit einem Durchmesser zwischen 3 mm und 6 mm und/oder einer Höhe zwischen 11,5 mm und 14,5 mm und/oder einer Entformungsschräge von mindestens 8 Grad und/oder einem Radius von mindestens 1,5 mm zu einem besonders effizienten Austausch von thermischer Energie zwischen dem Gehäuseelement und einem jeweiligen Temperierfluid führen.

Die gesamte Kanalhöhe ist insgesamt auch abhängig von der Höhe der Wirbelelemente und bspw. sollte so gewählt werden, dass ein minimaler Abstand zwischen Wirbelelementen und Abdeckelement von 0,5 mm ausgebildet ist. Bei einer bevorzugten Höhe der Wirbelelemente von 13,0 mm ist eine Kanalhöhe bspw. von 13,5 mm bevorzugt.

Durch vergleichbar höhere Wirbelelemente, insbesondere im Vergleich zu anderen bekannten Ausführungsformen oder auch im Vergleich der Höhe zum Durchmesser kann durch eine Erhöhung der Wärmeübertragungsfläche bei einem möglichst minimalen Druckverlust vergleichbar viel Wärme abgeführt werden.

Es ist weiterhin zweckmäßig, wenn ein zweites Element der Batteriesteuerung thermisch leitend an einer der ersten Seite gegenüberliegenden zweiten Seite des zweiten Gehäuseelements angeordnet ist. Dadurch kann das zweite Element der Batteriesteuerung ebenfalls zuverlässig temperiert werden. Insbesondere kann das zweite Element der Batteriesteuerung unabhängig von der Mehrzahl an Batteriezellen temperiert werden.

Von Vorteil ist es, wenn das erste Element der Batteriesteuerung zumindest ein elektrisches Bauteil des Batteriemoduls und/oder zumindest ein elektronisches Bauteil des Batteriemoduls umfasst.

Insbesondere kann zwischen dem ersten Element der Batteriesteuerung, bspw. dem elektrischen Bauteil und/oder dem elektronischen Bauteil, sowie dem Abdeckelement ein thermisches Ausgleichselement, wie beispielsweise ein thermisch leitfähiger Klebstoff oder ein sogenanntes thermal interface material (TIM), bspw. ein Gap-Pad oder Gap-Filler, angeordnet sein.

Beispielsweise durch eine Verbindung einer das elektronische Bauteil umfassenden Leiterplatte mit dem Abdeckelement, beispielsweise auch mittels Schrauben oder mittels einer stoffschlüssigen Verbindung, kann eine zuverlässige thermische Leitung ausgebildet werden. Insgesamt ergibt sich hierdurch ein vergleichbar kurzer thermischer Pfad zwischen einem den Strömungskanal durchströmenden Temperierfluid und der Leiterplatte mit einem somit vergleichbar niedrigen thermischen Widerstand.

Von Vorteil ist es dabei, wenn das elektrische Bauteil des Batteriemoduls ein Zellverbinder und/oder eine Leitung ist. Zellverbinder sind hierbei dazu ausgebildet, Spannungsabgriffe der Mehrzahl an Batteriezellen elektrisch leitend seriell und/oder parallel miteinander zu verbinden. Leitungen sind dazu ausgebildet, elektrischen Strom von einem Bauteil zu einem anderen Bauteil zu leiten. Bevorzugt ist es, wenn das elektronische Bauteil des Batteriemoduls ein Schalter, ein Sicherungselement, ein Batteriesteuerungssystem und/oder ein Widerstand ist. Durch die Anordnung des elektrischen Bauteils und/oder des elektronischen Bauteils an der ersten Seite ist es möglich, eine Mehrzahl an Batteriezellen des Batteriemoduls elektrisch leitend seriell und/oder parallel miteinander zu verschalten sowie ein Batteriemodul zu steuern und zu regeln. Weiterhin können diese Komponenten zugleich zuverlässig temperiert werden.

Gemäß einem bevorzugten Aspekt der Erfindung ist das zumindest eine elektronische Bauteil dabei in eine Leiterplatte integriert. Weiterhin kann auch die Leitung zumindest teilweise in die Leiterplatte integriert sein. Dies bietet den Vorteil einer vergleichbar kompakten Ausbildung, welche weiterhin ebenfalls einfach zu temperieren ist.

Es ist ferner zweckmäßig, wenn das zweite Element der Batteriesteuerung ein elektrischer Spannungswandler, insbesondere ein Gleichspannungswandler, ist. Weiterhin der elektrische Spannungswandler bzw. der Gleichspannungswandler auf einer weiteren Leiterplatte angeordnet sein bzw. in eine weitere Leiterplatte integriert sein.

Hierbei kann zwischen dem zweiten Element der Batteriesteuerung, bspw. dem elektrischen Spannungswandler bzw. dem Gleichspannungswandler, und der zweiten Seite des Gehäuseelements weiterhin ein thermisches Ausgleichsmaterial, wie beispielsweise ein thermisch leitfähiger Klebstoff, ein sogenannter Gapfiller oder ein sogenanntes thermal interface material (TIM), bspw. ein Gap-Pad oder ein Gap-Filler, angeordnet sein.

Durch eine Verbindung, wie beispielsweise mittels Schrauben, des elektrischen Spannungswandlers mit dem Gehäuseelement kann eine zuverlässige, thermische Leitung ausgebildet werden. Insgesamt ergibt sich hierdurch ein vergleichbar kurzer thermischer Pfad zwischen einem den Strömungskanal des Gehäuseelements durchströmenden Temperierfluids und dem elektrischen Spannungswandler bzw. dem Gleichspannungswandler mit einem somit vergleichbar niedrigen thermischen Widerstand.

Besonders bevorzugt ist es, wenn das Abdeckelement planar und aus einem metallischen Werkstoff ausgebildet ist oder wenn das Abdeckelement eine Umformung zur Aufnahme des ersten Elements der Batteriesteuerung aufweist. Insbesondere kann das Abdeckelement hierbei bevorzugt aus einem metallischen Blech ausgebildet sein.

Das Abdeckelement kann hierbei bspw. stoffschlüssig, wie insbesondere geschweißt, mit dem Gehäuseelement verbunden sein. Hierzu kann das Gehäuseelement bspw. einen Anbindungsbereich aufweisen, welcher ausgebildet, stoffschlüssig mit dem Abdeckelement verbunden zu sein. An dieser Stelle sei noch einmal angemerkt, dass das Abdeckelement den Strömungskanal fluiddicht abdichtet. Insbesondere durch die stoffschlüssige Verbindung des Abdeckelements mit dem Gehäuseelement kann eine solche Abdichtung ausgebildet werden.

Weiterhin ist es auch möglich, dass das Abdeckelement beispielsweise formschlüssig, wie insbesondere geschraubt, mit dem Gehäuseelement verbunden sein kann. Zur zuverlässigeren Abdichtung kann hierbei zwischen dem Abdeckelement und dem Gehäuseelement weiterhin ein Dichtelement angeordnet sein.

Eine planare Ausbildung des Abdeckelements bietet den Vorteil, dass eine vergleichbar möglichst große thermische Kontaktfläche zur Anbindung des ersten Elements der Batteriesteuerung ausgebildet ist.

Ein Abdeckelement mit einer Umformung zur Aufnahme des ersten Elements der Batteriesteuerung bietet zum Beispiel den Vorteil, dass eine von Temperierfluid durchströmbare Höhe des Strömungskanals entsprechend angepasst werden kann, wodurch ein besonders Bauraum optimiertes Design zur Verfügung gestellt werden kann. Des Weiteren kann eine zuverlässige Aufnahme des ersten Elements der Batteriesteuerung durch die Umformung zur Verfügung gestellt werden. Weiterhin sei bemerkt, dass das Abdeckelement aus einem metallischen Werkstoff ausgebildet ist, der metallische Werkstoff kann dabei ausgewählt sein, aus Aluminium, Kupfer oder Nickel. Dies bietet den Vorteil einer vergleichbar hohen thermischen Leitfähigkeit.

Insbesondere kann hierbei zwischen dem ersten Element der Batteriesteuerung und dem Abdeckelement ein thermisches Ausgleichselement, wie beispielsweise ein thermisch leitfähiger Klebstoff, angeordnet sein.

Es ist zweckmäßig, wenn das Gehäuseelement als Druckgussgehäuse ausgebildet ist, insbesondere einteilig ausgebildet ist. Dadurch kann eine mechanisch vergleichbar stabile Ausbildung zur Verfügung gestellt werden. Zudem ist es dadurch möglich, dass Temperfluid führende Bereiche innerhalb der Druckgussbauteile ausgebildet werden können, sodass auf zusätzliche Kühlplatten, Heizelemente oder Temperiersysteme verzichtet werden kann.

Bspw. können die Wirbelelemente, das Zwischenelement und das Strömungsleitelement während des Druckgussprozesses ausgebildet werden.

Es kann weiterhin vorgesehen sein, dass der Strömungskanal mindestens einen Freibereich umfasst, in dem keine Wirbelelemente angeordnet sind, wobei der mindestens eine Freibereich bevorzugt außerhalb eines Kopplungsbereichs liegt, an dem die Abdeckplatte mit dem ersten Element der Batteriesteuerung thermisch gekoppelt ist. Durch einen Freibereich des Strömungskanals, in dem keine Wirbelelemente angeordnet sind, d.h. der wirbelelementfrei ist, kann der Druckverlust in einer Zuführleitung zum Zuführen von Temperierfluid minimiert werden. Ferner bewirkt ein Freibereich eine schnelle Verteilung von Temperierfluid durch den Strömungskanal und, dadurch bedingt, eine besonders gute Entlüftung auch ohne Unterdruckbefüllung. Entsprechend kann unter Verwendung eines Freibereichs ein Temperierfluid in den Strömungskanal durch einfaches Befüllen bspw. aus einer Flasche oder einem Tank erfolgen, ohne dass eine Pumpvorrichtung angeschlossen werden muss.

Gegenstand der vorliegenden Erfindung ist auch ein Herstellungsverfahren zum Herstellen eines erfindungsgemäßen Gehäuseelements.

Das Herstellungsverfahren umfasst:
a) Bereitstellen eines Gehäuseelements,
   welches an einer ersten Seite eine Temperierstruktur ausbildet und
b) Verbinden eines Abdeckelements in der Art mit dem Gehäuseelement,
   dass das Abdeckelement einen von Temperierfluid durchströmbaren Strömungskanal fluiddicht begrenzt und
   die Temperierstruktur von dem Temperierfluid umströmbar ausgebildet ist, dadurch gekennzeichnet, dass
c) Anordnen eines ersten Elements einer Batteriesteuerung thermisch leitend an dem Abdeckelement.

Ferner wird die Temperierstruktur in der Art ausgebildet, dass sich an der ersten Seite ein Strömungsleitelement erhebt, das einen Strömungskanal zum Leiten des Temperierfluids begrenzt. Dabei erheben sich in dem Strömungskanal weiterhin eine Vielzahl von Wirbelelementen, wobei das Strömungsleitelement stoffschlüssig fluiddicht mit dem Abdeckelement verbunden wird.

Ferner die Erfindung auch die Verwendung eines erfindungsgemäßen Gehäuseelements in einer Batterie.

### Kurze Beschreibung der Zeichnungen

Ausführungsbeispiele der Erfindung sind in den Zeichnungen dargestellt und in der nachfolgenden Beschreibung näher erläutert.

Es zeigt:
- Figur 1: eine Ausführungsform eines erfindungsgemäßen Gehäuseelements einer Batterie in einer perspektivischen Ansicht,
- Figur 2: die Ausführungsform eines erfindungsgemäßen Gehäuseelements einer Batterie gemäß Figur 1 in einer Unteransicht ohne die Anordnung eines Abdeckelements,
- Figur 3: schematisch ein Herstellerverfahren zur Verbindung Abdeckelements mit einem Gehäuseelement,
- Figur 4: Detaildarstellungen von Wirbelelementen und
- Figur 5: Anordnung eines zweiten Elements der Batteriesteuerung.

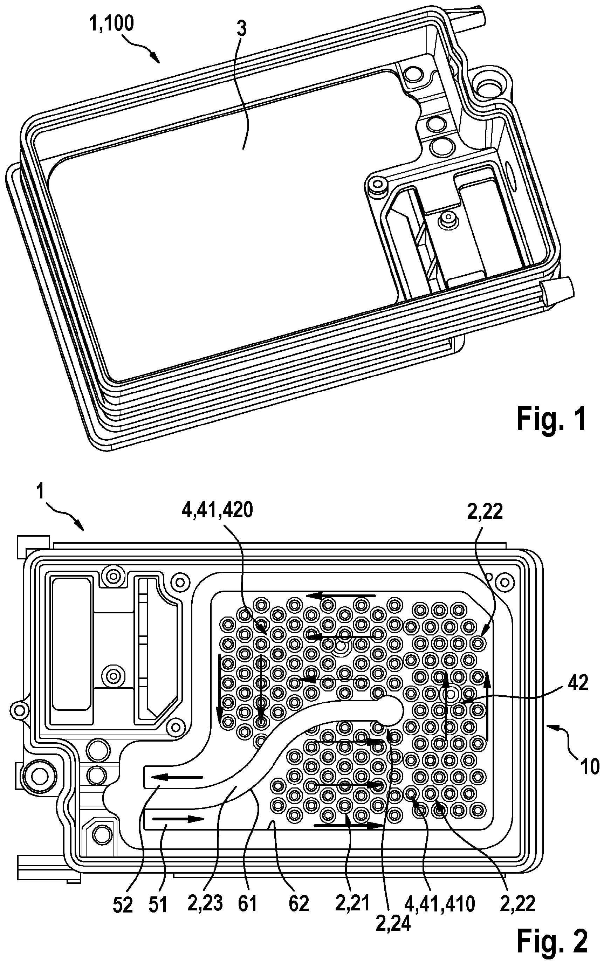

Die Figur 1 zeigt eine Ausführungsform eines erfindungsgemäßen Gehäuseelements 1 einer Batterie.

Das Gehäuseelement 1 der Batterie ist dabei dazu ausgebildet, mit einem weiteren in der Figur 1 nicht zu erkennenden Gehäuseelement verbunden zu werden. Dabei kann gemeinsam ein Innenraum ausgebildet werden, welcher zur Aufnahme einer Mehrzahl an Batteriezellen eines Batteriemoduls ausgebildet ist.

Das Gehäuseelement 1 ist dabei bevorzugt als Druckgussgehäuse 100 ausgebildet. Insbesondere ist das Druckgussgehäuse 100 einteilig ausgebildet.

In der Figur 1 ist dabei ein Abdeckelement 3 zu erkennen, welches mit dem Gehäuseelement 1 verbunden ist. Diese Verbindung ist dabei in der Art ausgebildet, dass das Abdeckelement 3 einen Strömungskanal 4, welcher im Zusammenhang mit Figur 2 beschrieben ist, fluiddicht begrenzt. Weiterhin ist Strömungskanal 4 von Temperierfluid durchströmbar ausgebildet.

Das Abdeckelement 3 kann dabei beispielsweise planar aus einem Metall ausgebildet sein.

Weiterhin ist an dem Abdeckelement 3 ein in der Figur 1 nicht zu erkennendes erstes Element 5 einer Batteriesteuerung thermisch leitend angeordnet.

Das erste Element 5 der Batteriesteuerung kann dabei beispielsweise zumindest ein elektrisches Bauteil 80 des Batteriemoduls und/oder zumindest ein elektronisches Bauteil 81 des Batteriemoduls umfassen.

Das elektrische Bauteil 80 des Batteriemoduls kann dabei beispielsweise ein Zellverbinder und/oder eine elektrische Leitung sein.

Das elektronische Bauteil 8 des Batteriemoduls kann dabei beispielsweise ein Schalter, ein Sicherungselement, ein Batteriesteuerungssystem und/oder ein Widerstand sein und ist insbesondere in eine Leiterplatte integriert.

Zudem kann an einer der ersten Seite 10 gegenüberliegenden Seite 11 ein zweites Element 50 einer Batteriesteuerung thermisch leitend an dem Gehäuseelement 1 angeordnet sein. Das zweite Element 50 der Batteriesteuerung kann dabei insbesondere ein elektrischer Spannungswandler, insbesondere ein Gleichspannungswandler, sein.

Die Figur 2 zeigt die Ausführungsform eines erfindungsgemäßen Gehäuseelements 1 einer Batterie gemäß Figur 1 in einer unter Ansicht ohne die Anordnung eines Abdeckelements 3.

Insbesondere ist dabei eine erste Seite 10 des Gehäuseelements 1 zu erkennen. Gemäß Figur 2 entspricht die erste Seite 10 der Unterseite des Gehäuseelements 1.

Dabei ist zu erkennen, dass an der ersten Seite 10 des Gehäuseelements 1 eine Temperierstruktur 2 ausgebildet ist. Nach der in der Figur 1 gezeigten Verbindung des Abdeckelements 3 mit dem Gehäuseelement 1 ist der von Temperierfluid durchströmbare Strömungskanal 4 ausgebildet. Die Temperierstruktur 2 ist dabei von dem Temperierfluid umströmbar ausgebildet.

Die Temperierstruktur 2 ist dabei insbesondere in der Art ausgebildet, dass sich an der ersten Seite 10 ein Strömungsleitelement 21 erhebt. Das Strömungsleitelement 21 begrenzt dabei die Strömungskanal 4 zum Leiten des Temperierfluids. Weiterhin erheben sich in dem Strömungskanal 4 an der ersten Seite 10 eine Vielzahl von Wirbelelementen 22. Diese sind dabei derart angeordnet, dass eine turbulente Strömung von in dem Strömungskanal 4 strömenden Temperierfluid bedingt ist.

Ferner sind an Flanken 61 des Zwischenelements 23 weitere Wirbelelemente 24 ausgestaltet. Zudem können auch Flanken 62 des Strömungsleitelements 21 Wirbelelemente 24 ausgebildet sein.

Insbesondere ist das Strömungsleitelement 21 dabei mit einer größeren Höhe ausgebildet als die jeweiligen Wirbelelemente 22. Somit ist die Abdeckplatte 3 auf dem Strömungsleitelement 21 beabstandet von den Wirbelelement 22 anordenbar.

Weiterhin umfasst das Strömungsleitelement 21 ein Zwischenelement 23. Dieses weist insbesondere eine Breite zwischen 8 mm und 12 mm auf.

Ferner teilt das Zwischenelement 23 den Strömungskanal 4 in zwei Teilkanäle 41. Diese beiden Teilkanäle 41 sind dabei lediglich an einem Ende 42 strömungsleitend miteinander verbunden.

Weiterhin ist zu erkennen, dass das Gehäuseelement 1 in einem ersten Teilkanal 410 einen Einlass 51 und einem zweiten Teilkanal 420 einen Auslass 52 umfasst. Durch den Einlass 51 kann dabei Temperierfluid in den Strömungskanal 4 einströmen und durch den Auslass 52 kann dabei Temperierfluid aus dem Strömungskanal 4 ausströmen.

Beispielsweise kann dabei die eingezeichnete Strömungsführung des Temperierfluids in dem Strömungskanal 4 ausgebildet werden.

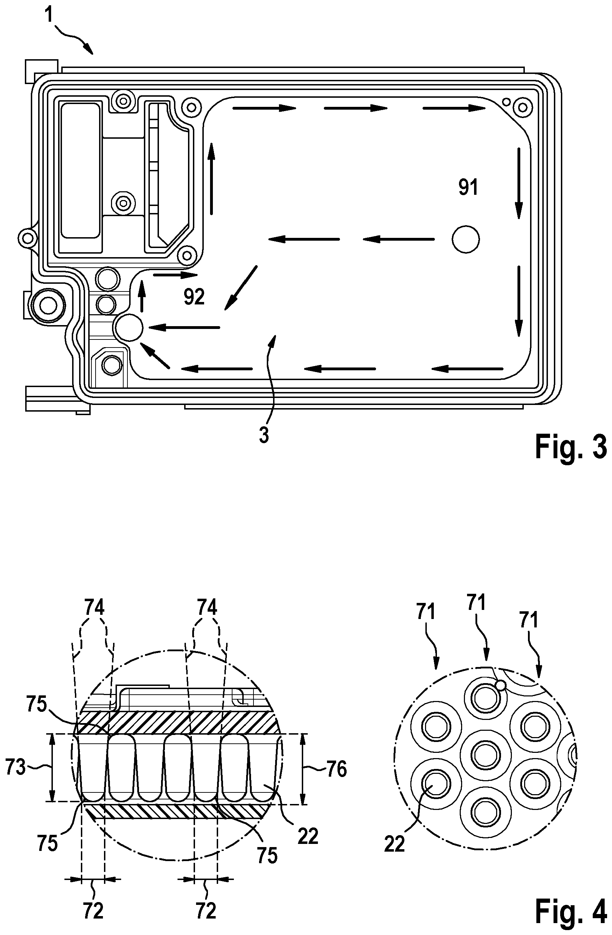

Die Figur 3 zeigt schematisch ein Herstellverfahren zur Verbindung eines Abdeckelements 3 mit einem Gehäuseelement 1. Die Verbindung wird dabei bevorzugt stoffschlüssig, insbesondere mittels Rührreibschweißens ausgebildet.

Der Startpunkt 91 liegt dabei an einem Ende des Zwischenelements 23. Der Schweißvorgang verläuft dabei zunächst entlang des Zwischenelements 23, umläuft das Strömungsleitelement 21 und endet an einem Endpunkt 92. Der Endpunkt 92 ist dabei einem Bereich zwischen dem Einlass 51 und Auslass 52 angeordnet. Beim Rührreibschweißen entsteht am Austrittspunkt des Werkzeuges grundsätzlich ein Loch. Da der Strömungskanal 4 mit einem Innendruck durch das Temperierfluid belastet wird, ist es von Vorteil den Endpunkt 92 als Austrittspunkt des Rührreibscheißwerkzeuges in einen Bereich zu legen, der durch den Innendruck mechanisch wenig belastet wird.

Die Figur 4 zeigt Detaildarstellungen von Wirbelelementen 22.

Dabei ist zunächst zu erkennen, dass die Wirbelelemente 22 in einem Muster ausgestaltet sind, welches eine Vielzahl an Reihen 71 umfasst.

Wirbelelement 22 jeweils benachbarter Reihen 71 sind dabei bevorzugt zwischen 8,5 mm und 12,5 mm beabstandet. Insbesondere ist ein Abstand von 10,5 mm zwischen Wirbelelementen 22 benachbarter Reihen 71 besonders bevorzugt.

Ferner sind benachbarte Reihen 71 jeweils symmetrisch versetzt zueinander angeordnet.

Ferner ist zu erkennen, dass die Wirbelelemente 22 kreisrund ausgebildet sind. An dieser Stelle sei angemerkt, dass unter kreisrund verstanden sein soll, dass die Wirbelelemente 22 eine kreisrund ausgebildete Querschnittsfläche aufweisen. Ein Durchmesser 72 der Wirbelelemente 22, insbesondere von deren Querschnittsfläche, beträgt dabei vorteilhaft zwischen 3 mm und 6 mm. Besonders bevorzugt ist ein Durchmesser 72 von 4,26 mm.

Zudem weisen die Wirbelelement 22 eine Höhe 73 von bevorzugt 11,5 mm bis 14,5 mm auf. Besonders bevorzugt ist eine Höhe 73 von 13 mm.

Weiterhin weisen die Wirbelelemente 22 eine Entformungsschräge 74 von mindestens 8 Grad auf. Weiterhin weisen die Wirbelelemente 22 ein Radius 75 von mindestens 1,5 mm auf.

Ferner ist aus der Figur 4 auch eine Kanalhöhe 76 ersichtlich, welche in diesem Ausführungsbeispiel bevorzugt 13,5 mm beträgt.

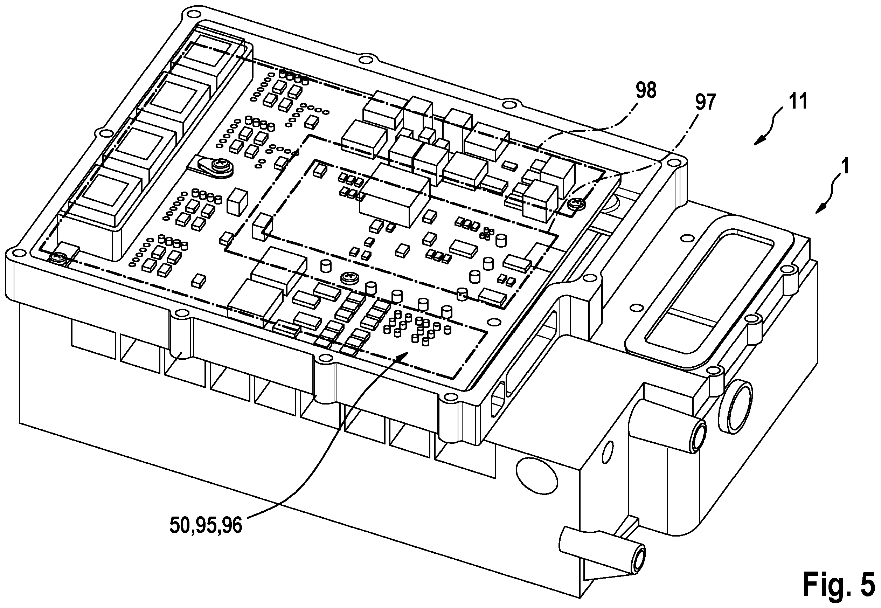

Die Figur 5 zeigt eine Anordnung eines zweiten Elements 50 der Batteriesteuerung.

In der Figur 5 ist dabei zunächst die der ersten Seite 10 gegenüber liegende zweite Seite 11 des Gehäuseelements 1 zu erkennen.

Weiterhin ist an der zweiten Seite 11 ein zweites Element 50 der Batteriesteuerung thermisch leitend an dem Gehäuseelement 1 angeordnet. Das zweite Element 50 der Batteriesteuerung ist dabei insbesondere ein elektrischer Spannungswandler 95, insbesondere ein Gleichspannungswandler 96.

Das zweite Element 50 der Batteriesteuerung kann dabei beispielsweise in zwei Bereiche 97, 98 aufgeteilt sein.

Ein erster Bereich 97 weist dabei Elemente des zweiten Elements 50 auf, welche keiner intensiven Temperierung bedürfen. Insbesondere ist in dem ersten Bereich 97 ein Logikteil angeordnet. Ein zweiter Bereich 98 weist dabei Elemente des zweiten Elements 50 auf, welche einer intensiven Temperierung bedürfen. Insbesondere ist in dem zweiten Bereich 98 dabei der Leistungsteil angeordnet. Der erste Bereich 97 ist dabei dem Zwischenelement 23 zugeordnet. Der zweite Bereich 98 ist dabei demjenigen Bereich des Strömungskanals 4 zugeordnet, welcher U-förmig von Temperierfluid durchströmt wird. Demzufolge weist der zweite Bereich 98 auch ein U-förmiges Profil auf.

Insgesamt kann hier durch das zweite Element 50 der Batteriesteuerung platzsparend und Temperierung optimiert angeordnet werden.

## Patentansprüche

1. Gehäuseelement einer Batterie, wobei
das Gehäuseelement (1) dazu ausgebildet ist,
mit einem weiteren Gehäuseelement unter Ausbildung eines zur Aufnahme einer Mehrzahl an Batteriezellen eines Batteriemoduls ausgebildeten gemeinsamen Innenraums verbunden zu werden, wobei das Gehäuseelement (1) an einer ersten Seite (10) eine Temperierstruktur (2) ausbildet und
ein Abdeckelement (3) in der Art mit dem Gehäuseelement (1) verbunden ist,
dass das Abdeckelement (3) einen von Temperierfluid durchströmbaren Strömungskanal (4) fluiddicht begrenzt und
die Temperierstruktur (2) von dem Temperierfluid umströmbar ausgebildet ist, **dadurch gekennzeichnet, dass**
weiterhin ein erstes Element (5) einer Batteriesteuerung thermisch leitend an dem Abdeckelement (3) angeordnet ist.

2. Gehäuseelement nach dem vorherigen Anspruch 1,
**dadurch gekennzeichnet, dass**
die Temperierstruktur (2) in der Art ausgebildet ist, dass sich an der ersten Seite (10) ein Strömungsleitelement (21) erhebt,
das den Strömungskanal (4) zum Leiten des Temperierfluids begrenzt, wobei sich in dem Strömungskanal (4) weiterhin eine Vielzahl von Wirbelelementen (22) erheben, welche in der Art angeordnet sind,
dass eine turbulente Strömung von in dem Strömungskanal (4) strömendem Temperierfluid bedingt ist, und wobei
das Strömungsleitelement (21) insbesondere mit einer größeren Höhe ausgebildet ist als jeweilige Wirbelelemente (22), sodass das Abdeckelement (3) auf dem Strömungsleitelement (21) beabstandet von den Wirbelelementen (22) anordenbar ist.

3. Gehäuseelement nach einem der vorherigen Ansprüche 1 oder 2,
**dadurch gekennzeichnet, dass**
das Strömungsleitelement (21) ein Zwischenelement (23) umfasst, welches insbesondere eine Breite zwischen 8 mm und 12 mm aufweist, und
das den Strömungskanal (4) in zwei lediglich an einem Ende (42) des Strömungskanals (4) strömungsleitend verbundene Teilkanäle (41) teilt, wobei
das Gehäuseelement (1) in einem ersten Teilkanal (410) einen Einlass (51) und in einem zweiten Teilkanal (420) einen Auslass (52) umfasst.

4. Gehäuseelement nach einem der vorherigen Ansprüche 2 oder 3,
**dadurch gekennzeichnet, dass**
an Flanken (61) des Zwischenelements (23) und/oder
an Flanken (62) des Strömungsleitelements (21)
weitere Wirbelelemente (24) ausgestaltet sind.

5. Gehäuseelement nach einem der vorherigen Ansprüche 2 bis 4,
**dadurch gekennzeichnet, dass**
die Wirbelelemente (22) in einem Muster ausgestaltet sind, welches
eine Vielzahl an Reihen (71) umfasst, wobei
jeweils Wirbelelemente (22) benachbarter Reihen (71) zwischen 8,5 mm und 12,5 mm beabstandet voneinander angeordnet sind und/oder
jeweils benachbarte Reihen (71) symmetrisch versetzt zueinander angeordnet sind.

6. Gehäuseelement nach einem der vorherigen Ansprüche 2 bis 5,
**dadurch gekennzeichnet, dass**
die Wirbelelemente (22) kreisrund ausgebildet sind und
einen Durchmesser (72) zwischen 3 mm und 6 mm und/oder
eine Höhe (73) zwischen 11,5 mm und 14,5 mm und/oder
eine Entformungsschräge (74) von mindestens 8 Grad und/oder
einen Radius (75) von mindestens 1,5 mm aufweisen.

7. Gehäuseelement nach einem der vorherigen Ansprüche 1 bis 6,
**dadurch gekennzeichnet, dass**
ein zweites Element (50) der Batteriesteuerung thermisch leitend an einer der ersten Seite (10) gegenüberliegenden zweiten Seite (11) des Gehäuseelements (1) angeordnet ist.

8. Gehäuseelement nach einem der vorherigen Ansprüche 1 bis 7,
das erste Element (5) der Batteriesteuerung
zumindest ein elektrisches Bauteil (80) des Batteriemoduls und/oder
zumindest ein elektronisches Bauteil (81) des Batteriemoduls umfasst.

9. Gehäuseelement nach dem vorherigen Anspruch 8,
**dadurch gekennzeichnet, dass**
das elektrische Bauteil (80) des Batteriemoduls
ein Zellverbinder und/oder eine Leitung ist und/oder dass
das elektronische Bauteil (81) des Batteriemoduls (10)
ein Schalter, ein Sicherungselement, ein Batteriesteuerungssystem und/oder
ein Widerstand ist und insbesondere in eine Leiterplatte integriert ist.

10. Gehäuseelement nach einem der vorherigen Ansprüche 7 bis 9,
**dadurch gekennzeichnet, dass**
das zweite Element (50) der Batteriesteuerung
ein elektrischer Spannungswandler (95),
insbesondere ein Gleichspannungswandler (96), ist.

11. Gehäuseelement nach einem der vorherigen Ansprüche 1 bis 10,
**dadurch gekennzeichnet, dass**
das Abdeckelement (3) planar aus einem Metall ausgebildet ist oder dass
das Abdeckelement (3) eine Umformung zur Aufnahme
des ersten Elements (5) der Batteriesteuerung aufweist.

12. Gehäuseelement nach einem der vorherigen Ansprüche 1 bis 11,
**dadurch gekennzeichnet, dass**
das Gehäuseelement (1) als Druckgussgehäuse (100) ausgebildet ist und insbesondere einteilig ausgebildet ist.

13. Herstellungsverfahren zum Herstellen eines Gehäuseelements (1) nach einem der Ansprüche 1 bis 12,
wobei das Herstellungsverfahren umfasst:
a) Bereitstellen eines Gehäuseelement (1),
welches an einer ersten Seite (10) eine Temperierstruktur (2) ausbildet und
b) Verbinden eines Abdeckelements (3) in der Art mit dem Gehäuseelement (1), dass das Abdeckelement (3) einen von Temperierfluid durchströmbaren Strömungskanal (4) fluiddicht begrenzt und
die Temperierstruktur (2) von dem Temperierfluid umströmbar ausgebildet ist, **dadurch gekennzeichnet, dass**
c) Anordnen ein erstes Element (5) einer Batteriesteuerung thermisch leitend an dem Abdeckelement (3).

14. Herstellungsverfahren nach dem vorherigen Anspruch 13,
**dadurch gekennzeichnet, dass**
die Temperierstruktur (2) in der Art ausgebildet wird, dass sich an der ersten Seite (10) ein Strömungsleitelement (21) erhebt, das den Strömungskanal (4) zum Leiten des Temperierfluids begrenzt, wobei sich in dem Strömungskanal (4) weiterhin eine Vielzahl von Wirbelelementen (22) erheben, wobei
das Strömungsleitelement (21) stoffschlüssig fluiddicht mit dem Abdeckelement (3)verbunden wird.

15. Verwendung eines Gehäuseelements (1) nach einem der Ansprüche 1 bis 12 in einer Batterie.
